# EUROPEAN PATENT APPLICATION

(11) **EP 4 841 092 A1**
(43) Date of publication of application: **18.11.2026**
(21) Application number: 26163398.6
(22) Date of filing: 09.03.2026
(51) Int. Cl.: F02F 11/00, F01P 1/06, F02F 1/04, F16J 15/08

(54) **A COMPOSITE GASKET FOR HEAT DISSIPATION IN AN INTERNAL COMBUSTION ENGINE**

(30) Priority: 16.05.2025 MY PI2025003017
(71) Applicant: Ashuka Technologies SDN BHD, 13600 Perai Pulau Pinang (MY)
(72) Inventor: LAI, CHEONG GAO, 13000 Butterworth (MY)
(74) Representative: Valet Patent Services Limited

(57) **Abstract**

The present invention relates to a composite gasket for heat dissipation in an internal combustion engine, comprising a planar gasket body (1) including: a plurality of perforated holes configured to align with and seal cylinder bores passage (2), coolant passages (3), oil passages (4), and bolt passages (5); and edges of the gasket body (1) characterized by: a plurality of evenly spaced honeycomb-shaped mesh holes (6), the honeycomb holes (6) protruding outwardly from the gasket installation to contact external air.

## Description

### TECHNICAL FIELD

The present invention relates to a composite gasket for heat dissipation in an internal combustion engine, more particularly for creating a heat exchange process that effectively maintains the engine's optimal operating temperature.

### BACKGROUND

The cylinder head gasket is a critical component of an internal combustion engine, serving as a seal between the cylinder head and the cylinder block to prevent leakage of combustion gases, coolant, and oil. Traditional cylinder head gaskets are composed of multiple seal plates that are sandwiched between these two main engine components, ensuring efficient sealing of the combustion chamber. Some designs leverage a self-sealing effect, enhancing the gasket's sealing capability by utilizing combustion pressure to improve its adherence to the mating surfaces.

To simplify manufacturing and reduce costs, conventional cylinder head gaskets often adopt a single-layer structure. However, this approach presents several limitations:

Structural Weakness: The single-layer design lacks sufficient strength to withstand extreme pressures and high temperatures around key areas such as the combustion chamber hole, water hole, tappet hole, and oil hole, leading to premature gasket failure.

Inefficient Heat Dissipation: Traditional gaskets do not effectively dissipate heat, resulting in localized overheating, which accelerates material degradation and negatively impacts engine performance.

Durability Concerns: Over time, thermal expansion and contraction degrade the material, increasing the likelihood of leaks.

Limited Cooling Efficiency: While the combustion process generates significant heat, existing gaskets do not actively contribute to cooling mechanisms, relying primarily on the engine's cooling system.

To address these challenges, honeycomb-structured gaskets have been introduced, offering enhanced strength, superior heat resistance, and improved durability. Various patented technologies have been developed in this field.

A granted Chinese Patent (CN205422975U) introduces a honeycomb cylinder head gasket. The gasket is assembled between the cylinder head and the cylinder block, with the three components coupled together using cylinder head bolts to compensate for deformation of the joint surfaces and provide effective sealing. The design includes a water dividing hole and an oil passage hole, allowing coolant and lubricating oil from the cylinder body to enter the cylinder head through the gasket. This setup contributes to cooling the cylinder head and lubricating the gas distribution system.

A Korean Patent (KR20040033842A) discloses an automotive cylinder head gasket structure designed to prevent coolant and oil leakage by improving sealing performance. The gasket structure includes: wiring placed along the circumference of the cylinder bore in the combustion chamber, independent of the core plate; an eyelet laminated to cover the wiring, reinforcing it;a bead plate layered on both sides of the core plate to seal coolant and oil channels, formed with multiple layers of bent plate members; a honeycomb-symmetrical bead plate with upper and lower sides bent symmetrically concerning the core plate; a stopper mounted around the core plate to maintain a consistent thickness for the gasket; an independently separated eyelet to prevent damage when the stepped cylinder liner shakes within the cylinder bore during engine startup.

Although honeycomb gaskets provide improved heat dissipation, most existing designs lack optimal efficiency in heat transfer. Additionally, material constraints remain a challenge, as the selection of composite materials must balance strength, flexibility, and thermal conductivity. These inefficiencies highlight the need for an improved gasket design.

In response to these challenges, the present invention discloses a composite gasket designed for enhanced heat dissipation in an internal combustion engine.

The gasket is configured to be installed sandwiched between a top cylinder head and a bottom crankcase, secured via bolts attached to the crankcase. The gasket facilitates heat dissipation by:

Dissipating heat generated during engine operation from combustion and mechanical components through protruding honeycomb edges.

Enabling cooling via forced convection, wherein ambient air moving against the engine during vehicle motion interacts with the protruding honeycomb edges, initiating a heat exchange process that maintains optimal engine operating temperatures.

On top of that, the composite gasket comprising rubber, stainless steel, copper, and a brass coating to enhance durability and heat resistance.

This innovative gasket design offers superior thermal regulation, enhanced structural integrity, and improved durability, making it a more effective and reliable solution for internal combustion engines.

### SUMMARY OF INVENTION

It is an objective of the present invention to provide a gasket creating a heat exchange process that effectively maintains the engine's optimal operating temperature.

It is also an objective of the present invention to provide a gasket to maintain the engine's thermal balance, improving its performance, longevity, and reliability.

Accordingly, these objectives may be achieved by following the teachings of the present invention. The present invention relates to a composite gasket for heat dissipation in an internal combustion engine, comprising: a planar gasket body (1) including: a plurality of perforated holes configured to align with and seal cylinder bores passage (2), coolant passages (3), oil passages (4), and bolt passages (5); and edges of the gasket body (1) characterized by: a plurality of evenly spaced honeycomb-shaped mesh holes (6), the honeycomb holes (6) protruding outwardly from the gasket installation to contact external air; wherein the gasket body (1) is composed of a composite material comprising rubber, stainless steel, copper, and a brass coating to enhance durability and heat resistance; wherein the gasket is configured to be installed sandwiched between a top cylinder head and a bottom crankcase, and coupled via bolts securing the crankcase; wherein the gasket facilitates heat dissipation by: dissipating heat generated from combustion and mechanical components through the protruding honeycomb edges; and enabling cooling via forced convection, wherein ambient air moving against the engine during vehicle motion interacts with the protruding honeycomb edges, initiating a heat exchange process that maintains optimal operating temperatures for the engine.

### BRIEF DESCRIPTION OF THE DRAWINGS

The features of the invention will be more readily understood and appreciated from the following detailed description when read in conjunction with the accompanying drawings of the preferred embodiment of the present invention, in which:

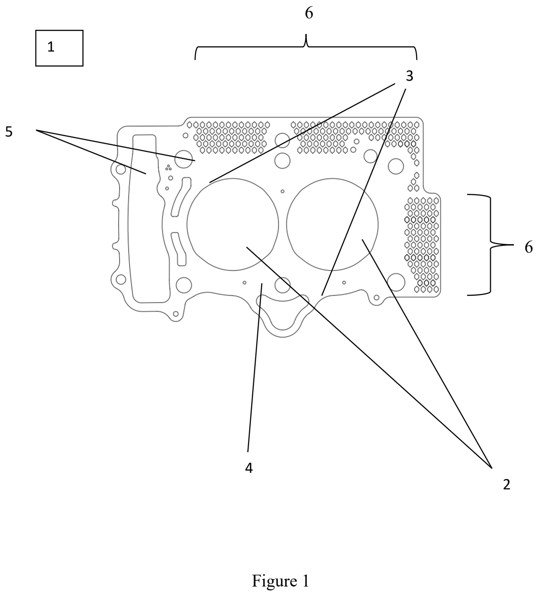

Figure 1 shows a simplified drawing of the gasket.

### DETAILED DESCRIPTION OF THE INVENTION

As required, a detailed embodiment of the present invention is disclosed herein; however, it is to be understood that the disclosed embodiment is merely an exemplary of the invention, which may be embodied in various forms. Therefore, specific details disclosed herein are not to be interpreted as limiting but merely as a basis for claims. It should be understood that the drawings and detailed description thereto are not intended to limit the invention to the particular form disclosed, but on the contrary, the invention is to cover all modifications, equivalents and alternatives falling within the scope of the present invention as defined by the appended claims. As used throughout this application, the word "may" is used in a permissive sense (i.e., meaning having the potential to), rather than the mandatory sense (i.e., meaning must). Similarly, the words "include," "including," and "includes" mean including, but not limited to. Further, the words "a" or "an" mean "at least one" and the word "plurality" means one or more, unless otherwise mentioned. Where the abbreviations or technical terms are used, these indicate the commonly accepted meanings as known in the technical field. The present invention will now be described with reference to Figure 1.

The present invention relates to a composite gasket for heat dissipation in an internal combustion engine, comprising:

a planar gasket body (1) including:
a. a plurality of perforated holes configured to align with and seal cylinder bores passage (2), coolant passages (3), oil passages (4), and bolt passages (5); and
b. edges of the gasket body (1) characterized by:
   i. a plurality of evenly spaced honeycomb-shaped mesh holes (6), the honeycomb holes (6) protruding outwardly from the gasket installation to contact external air;

wherein the gasket body (1) is composed of a composite material comprising rubber, stainless steel, copper, and a brass coating to enhance durability and heat resistance;
wherein the gasket is configured to be installed sandwiched between a top cylinder head and a bottom crankcase, and coupled via bolts securing the crankcase;
wherein the gasket facilitates heat dissipation by:
dissipating heat generated from combustion and mechanical components through the protruding honeycomb edges; and
enabling cooling via forced convection,
wherein ambient air moving against the engine during vehicle motion interacts with the protruding honeycomb edges, initiating a heat exchange process that maintains optimal operating temperatures for the engine.

Below is an example of a composite gasket for heat dissipation in an internal combustion engine from which the advantages of the present invention may be more readily understood. It is to be understood that the following example is for illustrative purpose only and should not be construed to limit the present invention in any way.

A gasket for heat dissipation in an internal combustion engine as shown in Figure 1, features a planar gasket body (1) with a plurality of perforated holes configured to align with cylinder bores passages (2), coolant passages (3), oil passages (4), and bolt passages (5). The gasket is characterized by edges comprising a plurality of evenly spaced honeycomb-shaped holes (6).

The gasket is constructed from composite materials, including rubber, stainless steel, copper, and a brass coating, to enhance durability and heat resistance.

The gasket, with its perforated holes, is installed sandwiched between the cylinder head and the crankcase, secured by bolts attached to the crankcase. During engine operation, hot air is generated from combustion and heat transfer from mechanical components. The gasket's honeycomb edges protrude slightly from the installation, allowing contact with external air to aid in temperature reduction-approximately 8%, for example, from an initial temperature of 90°C to 83 °C.

The gasket facilitates heat dissipation by enabling cooling through forced convection. Ambient air moving against the engine during vehicle motion interacts with the protruding honeycomb edges, initiating a heat exchange process that effectively maintains the engine's optimal operating temperature.

The relative movement between escaping engine air and incoming ambient air enhances this cooling process, ensuring efficient heat dissipation. This mechanism helps maintain the engine's thermal balance, improving its performance, longevity, and reliability.

Although the present invention has been described with reference to a specific embodiment, also shown in the appended figures, it will be apparent for those skilled in the art that many variations and modifications can be done within the scope of the invention as described in the specification and defined in the following claims.

Description of the reference numerals used in the accompanying drawings according to the present invention:

| **Reference Numerals** | **Description** |
|---|---|
| 1 | Gasket body |
| 2 | Cylinder bores passages |
| 3 | Cooland passages |
| 4 | Oil passages |
| 5 | Bolt passages |
| 6 | Honeycomb holes |

## Claims

1. A composite gasket for heat dissipation in an internal combustion engine, comprising:
a planar gasket body (1) including:
a plurality of perforated holes configured to align with and seal cylinder bores passage (2), coolant passages (3), oil passages (4), and bolt passages (5); and edges of the gasket body (1) **characterized by**:
a plurality of evenly spaced honeycomb-shaped mesh holes (6), the honeycomb holes (6) protruding outwardly from the gasket installation to contact external air;
wherein the gasket body (1) is composed of a composite material comprising rubber, stainless steel, copper, and a brass coating to enhance durability and heat resistance;
wherein the gasket is configured to be installed sandwiched between a top cylinder head and a bottom crankcase, and coupled via bolts securing the crankcase;
wherein the gasket facilitates heat dissipation by:
dissipating heat generated from combustion and mechanical components through the protruding honeycomb edges; and enabling cooling via forced convection,
wherein ambient air moving against the engine during vehicle motion interacts with the protruding honeycomb edges, initiating a heat exchange process that maintains optimal operating temperatures for the engine.
